(19) Europäisches Patentamt
European Patent Office
Office européen des brevets

(11) Veröffentlichungsnummer: **0 000 948**
**B1**

(12) **EUROPÄISCHE PATENTSCHRIFT**

(45) Veröffentlichungstag der Patentschrift: **14.10.81**

(51) Int. Cl.³: **C 08 J 11/00 //C08L75/04**

(21) Anmeldenummer: **78100751.3**

(22) Anmeldetag: **25.08.78**

(54) **Verfahren zum Herstellen polyolhaltiger Flüssigkeiten aus Polyurethanabfällen.**

(30) Priorität: **26.08.77 DE 2738572**

(43) Veröffentlichungstag der Anmeldung:
**07.03.79 Patentblatt 79/5**

(45) Bekanntmachung des Hinweises auf die Patenterteilung:
**14.10.81 Patentblatt 81/41**

(84) Benannte Vertragsstaaten:
**BE CH FR GB LU NL SE**

(56) Entgegenhaltungen:
**DE - A - 2 238 109**
**DE - A - 2 557 172**
**DE - B - 1 110 405**
**FR - A - 2 324 676**

(73) Patentinhaber: **Bauer, Gunter, Dr.**
**Krähenfeldstrasse 18**
**D-7080 Aalen 15 (DE)**

(73) Patentinhaber: **Apprich, Johannes**
**Langertstrasse 86**
**D-7080 Aalen (DE)**

(73) Patentinhaber: **Köble, Ludwig**
**Eichklingenstrasse 2**
**D-7081 Abtsgmünd (DE)**

(72) Erfinder: **Bauer, Gunter, Dr.**
**Krähenfeldstrasse 18**
**D-7080 Aalen 15 (DE)**

(74) Vertreter: **Patentanwälte Dipl.-Ing. A. Grünecker, Dr.-Ing. H. Kinkeldey, Dr.-Ing. W. Stockmair, Dr. rer. nat. K. Schumann, Dipl.-Ing. P. Jakob, Dr. rer. nat. G. Bezold Maximilianstrasse 43**
**D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 000 948 B1

# Verfahren zum Herstellen polyolhaltiger Flüssigkeiten aus Polyurethanabfällen

Die Erfindung betrifft ein Verfahren zum Herstellen polyolhaltiger Flüssigkeiten aus Polyurethanabfällen durch Erhitzen gegebenenfalls zerkleinerter Polyurethanabfälle mit mindestens einem Glykol in Gegenwart mindestens eines Metalls der ersten oder der zweiten Hauptgruppe des Periodischen Systems der Elemente und/oder mindestens einer stark basischen Verbindung eines Metalls der ersten oder zweiten Hauptgruppe des Periodischen Systems der Elemente auf Temperaturen von etwa 150 bis etwa 220°C.

Ein Verfahren der vorgenannten Art ist aus dem Referat aus "Chemisches Zentralblatt", 1962, S.6230, in dem die DE-AS 11 10 405 besprochen wird, bekannt. Gemäß der DE-AS 11 10 405 werden Polyurethanschaumstoffe bei Temperaturen von 175 bis 220°C mit Glykol und basischen Verbindungen, wie KOH, aufgeschlossen. In der dem vorgenannten Referat zugrundeliegenden DE-AS 11 10 405 wird lediglich Glykol bzw. Äthylenglykol (Beispiel 1 der DE-AS 11 10 405; Äthylenglykol; Beispiele 2 und 3: Glykol) genannt. Aus dem Gesamtzusammenhang der DE-AS 11 10 405 kann auch das in den Beispielen 2 und 3 genannte Glykol nur als das einfachste und übliche Glykol, nämlich Äthylenglykol, angesehen werden. Nachteilig an diesem Verfahren ist, daß lediglich nichthomogene Produkte erhalten werden, die vor der Weiterverarbeitung zu Polyurethanschaumstoffen abgetrennt, gereinigt und chemisch behandelt werden müssen.

In der US-PS 3 404 103 wird die thermische Zersetzung von Polyäther-Polyurethanen in Gegenwart mindestens eines Amins und mindestens eines Alkali- oder Erdalka- limetalloxids oder -hydroxids beschrieben. Bei diesem Verfahren wird ein Aminderivat der Polyisocyanatkomponente des Polyurethans sowie der Polyäther erhalten. Nachteilig an diesem Verfahren ist, daß hierzu teure und gesundheitsschädigende Amine, deren Handhabung bei den hohen Temperaturen der thermischen Zersetzung beträchtliche Gefahren mit sich bringt, verwendet werden müssen. Ferner bilden sich bei diesem Verfahren zwei Schichten, so daß das Reaktionsgemisch nicht ummittelbar wieder zur Herstellung von Polyurethanschaumstoffen verwendet werden kann; es muß vielmehr zuvor die Polyolkomponente aus dem Reaktionsgemisch in aufwendiger Weise abgetrennt werden.

Aus der US-PS 3 441 616 ist ein Verfahren zur Wiedergewinnung von Polyätherpolyolen aus Polyurethanen bekannt, bei dem das Polyurethan mit einer starken Base aus der Gruppe der Alkali- und Erdalkalimetalloxide und -hydroxide in einem Wasser/Dimethylsulfoxid-Medium hydrolysiert wird. Das bei der Hydrolyse erhaltene Polyätherpolyol muß dann aus dem Reaktionsgemisch mittels eines flüssigen, mit dem Wasser/Dimethylsulfoxid-Medium nicht mischbaren paraffinischen Kohlenwasserstoff in umständlicher Weise extrahiert werden, und das Polyätherpolyol muß anschließend aus dem Extrakt durch Abtrennen des paraffinischen Kohlenwasserstoffs gewonnen werden.

Weiterhin ist es bereits bekannt, Polyurethanabfälle durch Erhitzen mit Gemischen aus aliphatischen Diolen und Alkanolaminen zu polyolhaltigen Flüssigkeiten aufzuarbeiten. Gemäß der DE-AS 22 38 109 wird hierzu ein Dialkanolamin mit 4 bis 8 Kohlenstoffatomen eingesetzt, und die Umsetzung wird bei Temperaturen von etwa 175 bis 250°C durchgeführt. Ein ähnliches Verfahren ist aus der DE-OS 25 57 172 bekannt, bei dem als Alkanolamin ein Monoalkanolamin mit 2 bis 8 Kohlenstoffatomen eingesetzt und die Umsetzung bei Temperaturen von 150 bis 220°C durchgeführt wird. Bei diesem Verfahren werden zur Erzielung annehmbarer Reaktionszeiten relativ hohe Katalysatormengen benötigt. Durch den relativ hohen Katalysatoranteil in der so erhaltenen polyolhaltigen Flüssigkeit wird jedoch die Qualität des aus dieser Flüssigkeit hergestellten Polyurethans nachteilig beeinflußt. Ein weiterer Nachteil ist, daß die als Katalysatoren verwendeten Alkanolamine giftig sind und bei der hohen Reaktionstemperatur flüchtig gehen, was eine erhebliche Umweltgefährdung bedeutet.

Gemäß der zur vorstehend diskutierten DE-AS 22 38 109 korrespondierenden DE-OS 22 38 109 soll die Aufarbeitung von Polyurethanabfällen auch ohne Verwendung eines katalytisch wirksamen Dialkanolamins in Anwesenheit eines aliphatischen Diols, wie Dipropylenglykol, allein durchführbar sein. Es hat sich jedoch gezeigt, daß eine unkatalysierte Aufarbeitung in Anwesenheit von Dipropylenglykol allein zu keinen brauchbaren Ergebnissen führt; so werden die Reaktionszeiten um Größenordnungen verlängert, und als Reaktionsprodukt wird eine schwarze, für die Herstellung von Polyurethanschaumstoffen völlig unbrauchbare Masse erhalten.

Schließlich ist es aus der DE-OS 25 16 863 bekannt, Polyurethanabfälle durch Erhitzen zusammen mit aliphatischen Diolen, bei denen der die beiden Hydroxylreste trennende Alkylenrest verzweigtkettig sein, d.h. mindestens ein Kohlenstoffatom der Alkylenkette einen kurzkettigen Alkylrest tragen muß, in homogene Polyolgemische umzuwandeln. Ein Katalysator wird bei dieser Umsetzung nicht zugesetzt. Nachteilig an diesem Verfahren ist u.a. die unwirtschaftlich lange Reaktionszeit sowie die durch die lange Reaktionszeit hervorgerufene Bildung von Nebenprodukten.

Der vorliegenden Erfindung liegt die Aufgabe zugrunde, ein verbessertes Verfahren zur Herstellung polyolhaltiger Flüssigkeiten aus Polyurethanabfällen zu schaffen, das die Nachteile der bekannten Verfahren nicht aufweist und in einfacher Weise zu polyolhaltigen Flüssigkeiten führt, die direkt wieder zur Herstellung von qualitativ hochwertigen Polyurethanen verwendbar sind.

Diese Aufgabe ist bei einem Verfahren der eingangs genannten Art dadurch gelöst, daß man als Glykol Dipropylenglykol und/oder Tripropylenglykol einsetzt.

Nachstehend werden im einzelnen die Vorteile des erfindungsgemäßen Verfahrens gegenüber den aus der DE-OS 25 16 683 sowie der DE-OS 25 57 712 bekannten Verfahren, die auch zu homogenen polyolhaltigen Flüssigkeiten führen sollen, dargelegt:

Das im erfindungsgemäßen Verfahren verwendete System aus Di- und Tripropylenglykol mit basischen Alkali- und/oder Erdalkalimetallen und/oder -verbindungen führt gegenüber den beiden vorgenannten bekannten Verfahren zu wesentlich höheren Reaktionsgeschwindigkeiten, wobei unter denselben Reaktionsbedingungen deutliche Unterschiede in der Auflösegeschwindigkeit auftreten. Während beispielsweise bei Verwendung von 1% Natriumhydroxyd gemäß vorliegender Anmeldung eine Reaktionszeit von etwa 1,5 Stunden benötigt wird, werden bei Verwendung von 5% Monoäthanolamin gemaß der DE-OS 25 57 152 etwa 3 Stunden benötigt, um denselben Umsetzungsgrad zu erhalten. Bei Durchführung der Umsetzung ohne Katalysator gemäß der DE-OS 25 16 863 dauert die Reaktion etwa 10 bis 12 Stunden. Gegenüber dem mit einer kurzen Reaktionszeit auskommenden erfindungsgemäßen Verfahren sind die beiden bekannten, wesentlich längere Reaktionszeiten benötigenden Verfahren unwirtschaftlich.

Das erfindungsgemäße Verfahren zeichnet sich gegenüber dem aus der DE-OS 25 16 863 bekannten, ohne Katalysator arbeitenden Verfahren weiterhin dadurch aus, daß die Reaktion Vollständiger abläuft. Zwar kann man nach dem bekannten Verfahren auch homogene Reaktionsproduktgemische erhalten; dies ist jedoch nicht das alleinige Kriterium für die Brauchbarkeit des Reaktionsproduktes. Hierfür ist es nämlich wesentlich, daß die bei der Umsetzung erfolgende Umesterung vollständig abläuft, da nur dann eine hohe Mischfreundlichkeit des entstandenen, flüssigen, homogenen Reaktionsproduktes mit dem für die Herstellung von Polyurethan eingesetzten Isocyanat und dem Treibmittel erhalten wird. Durch gelpermeationschromatographische Messungen wurde festgestellt, daß die Mischfreundlichkeit mit niedrigerem Molekulargewicht des Reaktionsproduktes steigt, was wiederum mit dem bei der Reaktion erhaltenen Umsatz direkt zusammenhängt.

Bei Umsetzungen ohne Katalysator gemäß der DE-OS 25 16 863 werden zwar homogene Reaktionsproduktgemische erhalten; diese sind jedoch nicht niedrigmolekular genug, um die erforderliche Mischfreundlichkeit mit den anderen, für die Polyurethanherstellung benötigten Komponenten zu gewährleisten. Der Einsatz von nicht vollständig umgesetzten Reaktionsproduktgemischen, wie sie gemäß der DE-OS 25 16 863 erhalten werden, führt bei der Polyurethan-Herstellung zum Zusammenklumpen der Mischung, d.h., diese Reaktionsproduktgemische sind in praxi unbrauchbar. — Man kann zwar bei entsprechend langer Reaktionszeit und hohen Temperaturen nach dem aus der DE-OS 25 16 863 bekannten Verfahren ebenfalls eine vollständige Umsetzung erzielen; dies ist jedoch, wie Versuche gezeigt haben, mit Reaktionszeiten bis zu 24 Stunden und einer durch Nebenreaktionen hervorgerufenen Dunkel — färbung des Produkts verbunden. Mit solchen Reaktionsproduktgemischen können keine hochwertigen Schaumstoffe hergestellt werden.

Das erfindungsgemäße Verfahren zeichnet sich gegenüber dem aus der DE-OS 25 57 172 bekannten Verfahren zunächst durch die etwa doppelt so hohe Reaktionsgeschwindigkeit aus; das erfindungsgemaß Verfahren ist somit weit wirtschaftlicher als das bekannte Verfahren. Weiterhin ist hervorzuheben, daß im erfindungsgemäßen Verfahren wesentlich geringere Mengen eines billigeren Katalysators notwendig sind, wobei trotzdem höhere Reaktionsgeschwindigkeiten erzielt werden. Die beim Verfahren gemäß der DE-OS 25 57 172 als Katalysator eingesetzten und nachher im Reaktionsgemisch enthaltenen Amine reagieren bei der Polyurethan-Herstellung mit Isocyanaten in nachteiliger Weise zu Harnstoffstrukturen, die unerwünscht sind, weil sie die mechanischen Eigenschaften von Hartpolyurethanen nachteilig beeinflussen. Außerdem macht sich die Flüchtigkeit der im bekannten Verfahren verwendeten Amine nachteilig bemerkbar: Bei Reaktionstemperaturen um 200°C entweicht ein Teil der giftigen und umweltgefährdenden Amine aus dem Reaktionsgefäß, falls nicht aufwendige Vorrichtungen dies verhindern.

Weiterhin haben Vergleichsversuche gezeigt, daß die Säurezahl von gemäß der DE-OS 25 57 172 hergestellten Polyol-Reaktionsproduktgemischen weit höher liegen als die Säurezahl von erfindungsgemäß hergestellten Reaktionsproduktgemischen. Dieser Effekt tritt insbesondere dann auf, wenn im zu verarbeitenden Abfallpolyurethan Phosphorverbindungen enthalten sind. Solche Verbindungen sind, wenn man gemischte Abfälle aus verschiedenen Produktionen aufarbeitet, aufgrund der Gehalte an flammfesten Polyurethanen immer enthalten. Vergleichsversuche haben gezeigt, daß die nach der DE-OS 25 57 172 erhaltenen Produkte Säurezahlen bis zu 30 mg/KOH/g betragen können, während die Säurezahlen von erfindungsgemäß erhaltenen Produkten nicht über 2 mg KOH/g lagen. — Auch die gemäß der DE-OS 25 16 863 erhaltenen Reaktionsproduktgemische weisen hohe Säurezahlen auf. Diese sind auf die notwendigen langen Reaktionszeiten bei hohen Temperaturen zurückzuführen. — Die erfindungsgemäß hergestellten Reaktionsprodukte eignen sich daher ungleich besser zur bestimmungsgemäßen Wiederverwendung bei der Polyurethan-Herstellung, da hohe und schwankende Säurezahlen die Polyurethan-Bildungsreaktion blockieren.

Die vorstehenden Ausführungen zeigen, daß die nach den bekannten Verfahren erhaltenen Reaktionsproduktgemische nicht direkt für die Polyurethanherstellung weiderverwendbar sind. Es müssen zumindest vorher in einer aufwendigen und komplizierten Nachreaktion, z.B. mit Epoxiden, die Säurezahlen entsprechend korrigiert werden. Nur das erfindungsgemäße, unter Verwendung von Di- und oder Tripropylenglykol zusammen mit einem (Erd)-Alkalimetall und/oder einer stark basischen Verbindung eines solchen Metalls arbeitende Verfahren gewährleistet eine gleichmäßige Säurezahl des Reaktionsproduktgemisches zwischen 0 und 1 mg KOH/g und damit den direkten Einsatz des so erhaltenen Polyolgemisches zur Polyurethanherstellung.

Überraschenderweise sind die erfindungsgemäß verwendeten Katalysatoren bei der Reaktionstemperatur in dem Reaktionsgemisch löslich, wobei nach Beendigung der Reaktion keine Phasentrennung, Ausfällung oder ähnliche störende Effekte auftreten.

Nach dem erfindungsgemäßen Verfahren wird eine vollkommen homogene, mäßig viskose und von ihren chemischen Eigenschaften her hervorragend für die Herstellung insbesondere von Polyurethanhartschaumstoffen geeignete Polyolkomponente erhalten.

Neben der stark reaktionsbeschleunigenden Wirkung der erfindungsgemäß verwendeten Katalysatoren besteht ein weiterer wesentlicher Vorteil darin, daß im Gegensatz zu den in erheblich größeren Mengen notwendigen bekannten Alkanolaminen keine wesentliche zusätzliche Erhöhung der Hydroxylzahl bzw. der Funktionalität des Polyolgemisches eintritt und daß insbesondere die Säurezahl der erhaltenen polyolhaltigen Flüssigkeit wesentlich niedriger (im Bereich von 0 bis 1) liegt als bei Verwendung von Alkanolamin-Katalysatoren und darüberhinaus die Säurezahl nach dem erfindungsgemäßen Verfahren konstant gehalten werden kann. Ein wesentlicher Nachteil der mit Alkanolaminen katalysierten Reaktion besteht darin, daß auch bei Katalysatorkonzentrationen von über 5% Produkte mit sehr hohen Säurezahlen (im Bereich von 10 bis 20) entstehen. Diese hohen Säurezahlen haben zur Folge, daß bei der anschließenden üblichen Verschäumung der so erhaltenen polyolhaltigen Flüssigkeit zu Polyurethanschaumstoffen große Mengen an basischen Beschleunigern zugesetzt werden müssen, um brauchbare Reaktionszeiten zu erhalten. Weiterhin ist bei den erheblich schwankenden hohen Säurezahlen der mit Alkanolamin-Katalysatoren hergestellten polyolhaltigen Flüssigkeiten eine gleichmäßige und genau regelbare Startzeit beim Schäumprozeß kaum möglich. Darüberhinaus erhöhen die notwendigen großen Mengen an basischen Beschleunigern den Preis des Produktes und beeinträchtigen durch ihre Anwesenheit im Schaumstoff dessen Qualität.

Bei Verwendung der erfindungsgemäßen Katalysatoren treten diese Nachteile nicht auf. Für den Schaümprozess sind im Gegenteil geringere Beschleunigermengen notwendig als bei Verwendung üblicher käuflicher Polyolkomponenten, um zu gleichen Start- und Aushärtezeiten beim Schäumprozeß zu gelangen.

Ferner sind die erfindungsgemäß verwendeten Katalysatoren nicht giftig und bei der Reaktionstemperatur auch nicht flüchtig, so daß keinerlei Umweltbeeinträchtigungen auftreten können und das Verfahren problemlos durchführbar ist.

Im erfindungsgemäßen Verfahren werden als stark basische Verbindungen von Metallen der ersten oder der zweiten Hauptgruppe des periodischen Systems der Elemente vorzugsweise deren Oxide, wie Lithiumoxid, Natriumoxid und Magnesiumoxid, Hydroxide, wie Natriumoxid, Kaliumhydroxid und Calciumhydroxid, Alkoholate, wie Natriummethylat, Kaliumäthylat und Magnesiumäthylat, Phosphate, wie Trinatriumphosphat und/oder Acetate, wie Natriumacetat und Kaliumacetat, eingesetzt. Außer den bevorzugten Acetaten können auch andere basische Alkali- oder Erdalkalisalze von Carbonsäuren verwendet werden, beispielsweise die Alkali- und Erdalkaliformiate. Auch Carbonate, wie Natriumcarbonat, sind im erfindungsgemäßen Verfahren als Katalysatoren verwendbar.

Vorzugsweise werden als basische Katalysatoren Lithium, Natrium, Kalium, Magnesium und/oder Calcium und/oder mindestens eine stark basische Verbindung dieser Metalle verwendet, wobei Natrium und seine Verbindungen aufgrund der damit erzielten besonders vorteilhaften Ergebnisse besonders bevorzugt sind. Unter den Natriumverbindungen werden vorzugsweise Natriumhydroxid und Natriumacetat verwendet.

Die erfindungsgemäß verwendeten Katalysatoren werden zweckmäßigerweise in Mengen von etwa 0,1 bis etwa 10%, bezogen auf das Gewicht des Polyurethanabfalls, eingesetzt. Es hat sich überraschenderweise gezeigt, daß bei Verwendung einer größeren Katalysatormenge die Umsetzung bei niedrigeren Temperaturen, z.B. bei 160°C, effektiv durchgeführt werden kann. Das Durchführen der Umsetzung bei relativ niedrigen Temperaturen hat den Vorteil, daß die so hergestellten polyolhaltigen Flüssigkeiten lediglich schwach gefärbt sind.

Vorzugsweise werden 0,5 bis 5% Katalysator, bezogen auf das Gewicht des Polyurethanabfalls, eingesetzt. Wenn man in dem innerhalb dieses Bereiches ebenfalls bevorzugten Bereich von 0,5 bis 2% Katalysator arbeitet, sind Reaktionstemperaturen im Bereich von 190 bis 210°C ausreichend, so daß diese in Kombination mit der Katalysatormenge von 0,5 bis 2% bevorzugt sind. Wenn man hingegen mit höheren Katalysatormengen im Bereich von 2 bis 5% arbeitet, sind Reaktionstemperaturen im Bereich von 160 bis 190°C ausreichend und bevorzugt.

Das Gewichtsverhältnis von aliphatischem Diol zu den Polyurethanabfällen beträgt beim erfindungsgemäßben Verfahren zweckmäßigerweise etwa 3:5 bis etwa 5:1 und vorzugsweise etwa 4:5 bis etwa 2:1. Mittels des erfindungsgemäßen Verfahrens lassen sich polyolhaltige Flüssigkeiten aus beliebigen Polyurethanabfällen, d.h. aus zelligen (geschlossenzelligen und offenzelligen) und nichtzelligen Polyurethanabfällen, herstellen, wobei es sich hierbei um Polyurethane auf Basis von Polyätherpolyolen und/oder Polyesterpolyolen handeln kann. Vorzugsweise werden Polyurethane auf Basis von Polyätherpolyolen eingesetzt. Insbesondere eignet sich das erfindungsgemäßbe Verfahren zur Herstellung polyolhaltiger Flüssigkeiten aus Polyurethanschaumstoffabfällen, wobei unter Verwendung

von Polyurethanschaumstoffabfällen besonders gute Ergebnisse erzielt werden. Nach dem erfindungsgemäßen Verfahren können jedoch auch Polyurethanweichschaumstoffe und Polyisocyanuratschaumstoffe sowie flammschutzmittelhaltige Polyurethanabfälle, die beispielsweise Phosphor, Antimon, Chlor oder Brom enthalten, zu polyolhaltigen Flüssigkeiten verarbeitet werden. Weiterhin eignet sich das erfindungsgemäße Verfahren in ausgezeichneter Weise für die Verarbeitung beliebiger Technischer Polyurethanabfallgemische, die verschiedene Isocyanatbausteine, Präpolymere, Polyisocyanuratbausteine sowie verschiedene Polyolkomponenten und andere Zusätze, wie Flammschutzmittel, enthalten. Nach dem erfindungsgemäßen Verfahren lassen sich also technische Polyurethanabfälle verschiedenster Herkunft und Zusammensetzung problemlos gemeinsam zu polyolhaltigen Flüssigkeiten verarbeiten, die dann direkt wieder zur Polyurethanherstellung eingesetzt werden können.

Eine zweckmäßige Ausführungsform des erfindungsgemäßen Verfahrens wird im einzelnen nachstehend beschrieben:

Das aliphatische Diol wird in einem Reaktor vorgelegt und auf 50 bis 200°C erhitzt. Das erwärmte Diol wird dann auf einmal oder portionsweise mit dem erfindungsgemäß verwendeten basischen Katalysator versetzt und ggfs. auf die anspruchsgemässe Temperatur erhitzt. Anschließend wird das umzusetzende Polyurethan in fester, zerkleinerter Form zudosiert. Der Zusatz des Polyurethans in Form kleiner Teilchen, die beispielsweise durch Vermahlen erzeugt werden, hat den Vorteil, daß das Volumen des Ausgangsmaterials verringert, die Zudosierung erleichtert und die Reaktionszeit verkürzt wird. Die Zudosierung des Polyurethans wird so vorgenommen, daß die Viskosität des Reaktionsgemisches im Reaktor gerade niedrig genug ist, um eine vollständige Durchmischung und einen ausreichenden Wärmeaustausch zu gewährleisten. Die Reaktion ist dann beendet, wenn die Viskosität auf ein Minimum abgesunken ist bzw. das Reaktionsgemisch vollständig homogen ist und bei der Prüfung durch Aufträgen in dünner Schicht keine sichtbaren festen Partikel mehr enthält.

Bei der Durchführung der Umsetzung destillieren flüchtige Bestandteile ab. Diese enthalten einen Teil des eingesetzten Diols, Wasser, das als basischen Beschleuniger für die Poly-urethanherstellung verwendeten Amins sowie - bei der Aufarbeitung von Polyurethanschaumstoffen - das zum Aufschäumen verwendete Treibmittel. Dieses Gemisch kann aufgearbeitet werden, wobei das wiedergewonnene Diol wieder in den Reaktor eingespeist werden kann. Das wiedergewonnene Amin und das Treibmittel können wieder zur Polyurethanherstellung verwendet werden.

Das erfindungsgemäße Verfahren kann diskontinuierlich, halbkontinuierlich sowie auch kontinuierlich durch gleichzeitige Zugabe aller Komponenten durchgeführt werden.

Nachstehend werden die im erfindungsgemäßen Verfahren ablaufenden Reaktionen noch mit den bei der bekannten Aminkatalysierten Umsetzung ablaufenden Reaktionen verglichen:

Die unter Verwendung der erfindungsgemäßen Katalysatoren ablaufenden Reaktionen unterscheiden sich grundsätzlich von den bei der Amin-katalysierten Umsetzung ablaufenden Reaktionen. Während im letzteren Fall das an der Urethan-gruppierung des Polyurethans angreifende Agens das Amin selbst ist, muß im ersteren Fall von folgendem Reaktionsablauf, der nachstehend am Beispiel von Natriumhydroxid dargestellt wird, ausgegangen werden: Wenn Natriumhydroxid in einem Glykol gelöst wird, bildet sich folgendes Gleichgewicht aus:

$$NaOH + HO-R-OH \rightleftharpoons NaO-R-OH + H_2O$$

$$\updownarrow$$

$$Na^{+}\;{}^{-}O-R-OH$$

Das zunächst weit nach links verschobene Gleichgewicht wird durch den verwendeten Diolüberschuß und durch die durch die hohe Reaktionstemperatur bedingte Entfernung des Wassers nach rechts verschoben. Es ist deshalb davon auszugehen, daß sowohl das Hydroxylanion als auch das Alkoholatanion als katalytisch wirkende, an der Urethangruppierung angreifende Teilchen wirken. Aufgrund der höheren Nukleophilie des Alkoholatanions ist jedoch dessen Angriff an die Urethangruppierung erleichtert. Derselbe Effekt wird erzielt, wenn anstelle eines Alkali- oder Erdalkalihydroxids das entsprechende Metall oder ein entsprechende Alkoholat engesetzt wird. Dasselbe gilt für basische Alkali- oder Erdalkalisalze schwacher Säuren. Diese Salze hydrolysieren unter den gegebenen Bedingungen und bilden Hydroxyanionen, die denselben katalytischen Vorgang auslösen.

Der weitere Ablauf der Reaktion kann wie folgt formuliert werden:

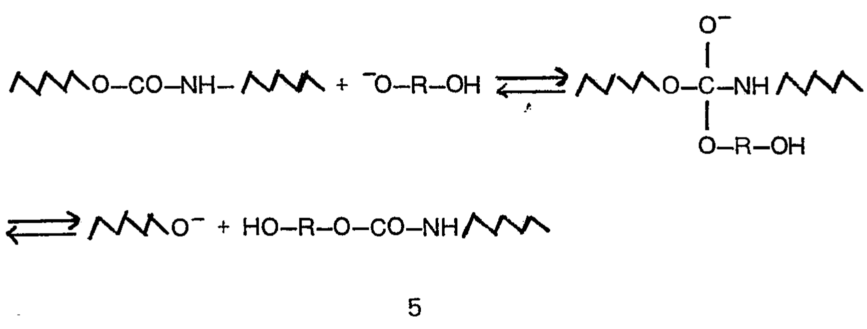

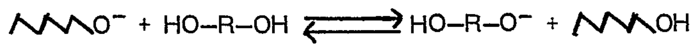

Das neu gebildete Alkoholatianion tritt erneut in die Reaktion mit einer Urethangruppierung ein.

Die Reaktion mit Hydroxylanionen verläuft entsprechend, wobei allerdings andere Sekundärreaktionen zu erwarten sind:

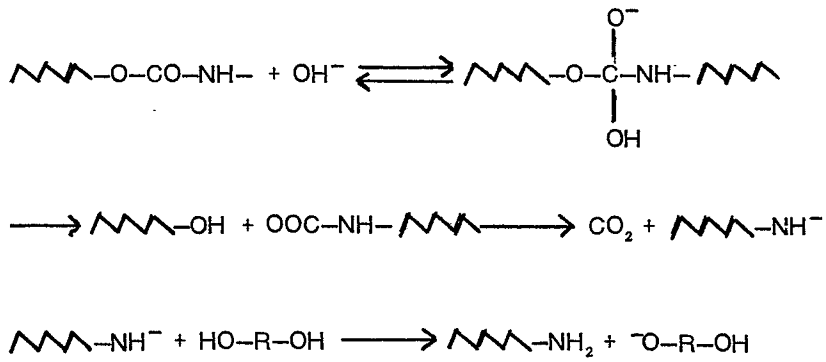

In Übereinstimmung mit dem vorstehenden Schema wurde nachgewiesen, daß bei der Umsetzung $CO_2$ entsteht.

Die bessere Wirksamkeit und die wesentlich geringeren erforderlichen Konzentrationen der erfindungsgemäß eingesetzten Katalysatoren beruhen vermutlich erstens auf ihrer höheren Basizität bzw. Nukleophilie und zweitens auf der immer auf Neue erfolgenden Rückbildung der aktiven Katalysatorteilchen.

Im Gegensatz zur erfindungsgemäßen Katalyse wird bei der bekannten Amin-katalysierten Umsetzung der Katalysator durch Umamidierung unter Harnstoffbildung während der Reaktion nach folgendem Schema verbraucht:

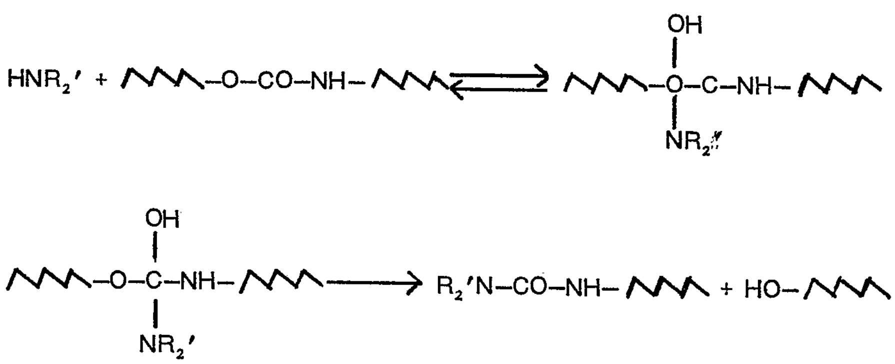

Dies dürfte der Grund dafür sein, daß bei der aminkatalysierten Umsetzung wesentlich höhere Katalysatormengen benötigt werden als bei der erfindungsgemäßen Reaktion. Harnstoffgruppierungen sind zudem der Qualität von Polyurethanschaumstoffen abträglich.

Die besonders ausgeprägte Wirksamkeit von Natrium sowie der Natriumverbindungen im erfindungsgemäßen Verfahren gegenüber anderen Alkali- und Erdalkalimetallen und deren Verbindungen ist vermutlich darauf zurückzuführen, daß Natriumionen geeignetere Komplexe oder Kontaktionenpaaren im Übergangszustand beim Angriff an der Urethangruppierung bilden können.

Die Beispiele erläutern die Erfindung. Sämtliche Beispeile wurden mit technischen Polyurethanpulvermischungen durchgeführt.

## Beispiel 1

Ausgangssubstanzen:

500 g Polyurethan
500 g Dipropylenglykol
5 g Natriumhydroxid (1%, bezogen auf Polyurethan)

Reaktionstemperatur: 200°C
Zugabezeit: 35 Minuten
Nachreaktionszeit: 35 Minuten

Gesamtreaktionszeit: 70 Minuten
Eigenschaften: dunkelbraune viskose homogene Flüssigkeit
Hydroxylzahl: 0,2 mg KOH/g
Säurezahl: 0,2 mg KOH/g
pH-Wert einer 10 %igen Lösung: 9,5.

Schäumversuche:

75 g der wie vorstehend beschrieben erhaltenen polyolhaltigen Flüssigkeit wurde mit 2 g eines üblichen Silikonnetzmittels, 2 g eines üblichen Aminkatalysators und 25 g eines üblichen Fluorchlormethantreibmittels versetzt und innig vermischt. Danach wurde die Mischung mit 100 g Methylenediphenyldiisocyanat versetzt und 30 Sekunden intensiv gerührt. Nach weiteren 30 Sekunden setzt das Aufschäumen ein. Nach weiteren 2 Minuten war der Schaumstoff ausgehärtet. Bei Reduzierung der Katalysatormenge um ein Drittel der üblichen Menge werden brauchbare Reaktionszeiten erhalten. Feinporiger geschlossenzelliger Schaum mit hervorragenden mechanischen Eigenschaften, insbesondere hoher Druck- und Abriebsfestigkeit.

Die nachstehenden Beispiele und Schäumversuche wurden entsprechend Beispiel 1 durchgeführt.

## Vergleichsbeispiel

Ausgangssubstanzen:

500 g Polyurethan
500 g Diäthylenglykol
25 g Monoäthanolamin (5%, bezogen auf Polyurethan)

Reaktionstemperatur: 200°C
Zugabezeit: 100 Minuten
Nachreaktionszeit: 75 Minuten
Gesamtreaktionszeit: 175 Minuten
Eigenschaften: rotbraun, relativ gering viskose homogene Flüssigkeit.
Hydroxylzahl: 580 mg KOH/g
Säurezahl: 10,5 mg KOH/g
pH-Wert einer 10 %igen Lösung: 3,6

Schäumversuche:

Langsame Reaktion, lange Start- und Aushärtungszeiten im Vergleich zur Verwendung des nach Beispiel 1 hergestellten Polyols. Sehr grobporiger Schaum mit mangelhaften mechanischen Eigenschaften.

## Beispiel 2

Ausgangssubstanzen:

500 g Polyurethan
500 g Dipropylenglykol
5 g Natriumacetat (1%, bezogen auf Polyurethan)

Reaktionstemperatur: 200°C
Zugabezeit: 40 Minuten
Nachreaktionszeit: 45 Minuten
Gesamtreaktionszeit: 95 Minuten
Eigenschaften: dunkelbraune viskose homogene Flüssigkeit
Hydroxylzahl: 510 mg KOH/g
Säurezahl: 0,1 mg KOH/g
pH-Wert einer 10 %igen Lösung: 10,0.

Schäumversuche:

Sehr kurze Start- und Aushärtezeiten. Zur Erzielung brauchbarer Reaktionszeiten muß die Katalysatormenge auf ein Drittel reduziert werden. Feinporiger geschlossenzelliger Schaum mit hervorragenden mechanischen Eigenschaften.

Beispiel 3

Ausgangssubstanzen:

500 g Polyurethan
800 g Dipropylenglykol
5 g Kaliumhydroxid

Reaktionstemperatur: 190°C
Zugabezeit: 80 Minuten
Nachreaktionszeit: 80 Minuten
Gesamtreaktionszeit: 160 Minuten
Eigenschaften: dunkelbraune relativ gering viskose homogene Flüssigkeit.
Hydroxylzahl: 558 mg KOH/g
Säurezahl: 1,0 mg KOH/g
pH-Wert einer 10 %igen Lösung: 7,5

Schäumversuche:
Günstige Start- und Aushärtezeiten. Feinporiger geschlossen-zelliger Schaum mit hervorragenden mechanischen Eigenschaften.

Beispiel 4

Ausgangssubstanzen:

500 g Polyurethan
500 g Dipropylenglykol
10 g Lithiumhydroxydhydrat

Reaktionstemperatur: 200°C
Zugabezeit: 60 Minuten
Nachreaktionszeit: 40 Minuten
Gesamtreaktionszeit: 100 Minuten
Eigenschaften: Dunkelbraune viskose homogene Flüssigkeit
Hydroxylzahl: 490 mg KOH/g
Säurezahl: 0,8 mg KOH/g
pH-Wert einer 10 %igen Lösung: 8,0.

Schäumversuche:
Kurze Start- und Aushärtzeiten. Feinporiger Schaum mit guten mechanischen Eigenschaften.

Beispiel 5

Ausgangssubstanzen:

500 g Polyurethan
500 g Dipropylenglykol
10 g Calciumhydroxid

Reaktionstemperatur: 210°C
Zugabezeit: 60 Minuten
Nachreaktionszeit: 50 Minuten
Gesamtreaktionszeit: 110 Minuten
Eigenschaften: Dunkelbraune viskose homogene Flüssigkeit
Hydroxylzahl: 478 mg KOH/g
Säurezahl: 0,5 mg KOH/g
pH-Wert einer 10 %igen Lösung: 9,0

Schäumversuche:
Günstige Start- und Aushärtezeiten. Feinporiger Schaum mit guten mechanischen Eigenschaften.

## Beispiel 6

Ausgangssubstanzen:

500 g Polyurethan
500 g Dipropylenglykol
10 g Trikaliumphosphathydrat

Reaktionstemperatur: 200°C
Zugabezeit: 80 Minuten
Nachreaktionszeit: 60 Minuten
Gesamtreaktionszeit: 140 Minuten
Eigenschaften: Dunkelbraune hochviskose Flüssigkeit. Eine geringe Menge eines festen kristallinen Rückstandes kann in der Hitze abfiltriert werden.
Hydroxylzahl: 505 mg KOH/g
Säurezahl: 2,1 mg KOH/g
pH-Wert einer 10 %igen Lösung: 7,0

Schäumversuche:
Befriedigende Start- und Aushärtezeiten. Feinporiger Schaum mit guten mechanischen Eigenschaften.

## Beispiel 7

Ausgangssubstanzen:

500 g Polyurethan
500 g Dipropylenglykol
10 g Trinatriumphosphat

Reaktionstemperatur: 200°C
Zugabezeit: 70 Minuten
Nachreaktionszeit: 60 Minuten
Gesamtreaktionszeit: 130 Minuten
Eigenschaften: Dunkelbraune hochviskose Flüssigkeit. Eine geringe Menge eines festen kristallinen Rückstandes kann in der Hitze abfiltriert werden.
Hydroxylzahl: 485 mg KOH/g
Säurezahl: 2,0 mg KOH/g
pH-Wert einer 10 %igen Lösung: 7,2

Schäumversuche:
Befriedigende Start- und Aushärtezeiten. Feinporiger Schaum mit guten mechanischen Eigenschaften.

## Beispiel 8

Ausgangssubstanzen:

500 g Polyurethan
800 g Dipropylenglykol
3 g metallisches Natrium

Das Natrium wird zu dem noch nicht erwärmten Dipropylenglykol in Form von kleinen Stücken auf einmal zugegeben. Nach Erwärmen auf 50°C löst sich das Natrium unter heftiger Wasserstoffentwicklung vollständing auf. Anschließend wird auf 200°C erhitzt und wie in Beispiel 1 beschrieben, weiterverfahren:

Reaktionstemperatur: 200°C
Zugabezeit: 30 Minuten
Nachreaktionszeit: 25 Minuten
Gesamtreaktionszeit: 55 Minuten
Eigenschaften: Dunkelbraune, relativ gering viskose homogene Flüssigkeit.
Hydroxylzahl: 550 mg KOH/g
Säurezahl: 0 mg KOH/g
pH-Wert einer 10 %igen Lösung: 10,4

Schäumversuche:

Sehr kurze Start- und Aushärtezeiten. Feinporiger geschlossenzelliger Schaum mit hoher Druck- und Abriebsfestigkeit.

Beispiel 9

Ausgangssubszen:

500 g Polyurethan
500 g Tripropylenglykol
5 g Natriumoxid

Reaktionstemperatur: 200°C
Zugabezeit: 40 Minuten
Nachreaktionszeit: 30 Minuten
Gesamtreaktionszeit: 70 Minuten
Eigenschaften: Dunkelbraune, hochviskose homogene Flüssigkeit.
Hydroxylzahl: 440 mg KOH/g
Säurezahl: 0,1 mg KOH/g
pH-Wert einer 10 %igen Lösung: 10,0

Schäumversuche:

Sehr kurze Start- und Aushärtezeiten. Feinporiger geschlossenzelliger Schaum mit guten mechanischen Eigenschaften.

Beispiel 10

Ausgangssubstanzen:

500 g Polyurethan
800 g Dipropylenglykol
5 g Natriummethylat

Reaktionstemperatur: 200°C
Zugabezeit: 25 Minuten
Nachreaktionszeit: 30 Minuten
Gesamtreaktionszeit: 55 Minuten
Eigenschaften: Dunkelbraune, viskose homogene Flüssigkeit.
Hydroxylzahl: 585 mg KOH/g
Säurezahl: 0,4 mg KOH/g
pH-Wert einer 10 %igen Lösung: 9,3

Schäumversuche:

Sehr kurze Start- und Aushärtezeiten. Feinporiger geschlossenzelliger Schaum mit guten mechanischen Eigenschaften.

**Patentansprüche**

1. Verfahren zum Herstellen polyolhaltiger Flüssigkeiten aus Polyurethanabfällen durch Erhitzen gegebenenfalls zerkleinerter Polyurethanabfälle mit mindestens einem Glykol in Gegenwart mindestens eines Metalls der ersten oder der zweiten Hauptgruppe des Periodischen Systems der Elemente und/oder mindestens einer stark basischen Verbindung eines Metalls der ersten oder zweiten Hauptgruppe des Periodischen Systems der Elemente als Katalysator auf Temperaturen von etwa 150 bis etwa 220°C, dadurch gekennzeichnet, daß man als Glykol Dipropylenglykol und/oder Tripropylenglykol einsetzt.

2. Verfahren nach Anspruch 1, dadurch gekennzeichnet, daß man als stark basische Verbindung eines Metalls der ersten oder zweiten Hauptgruppe des periodischen Systems der Elemente ein Oxid, Hydroxid, Alkoholat, Phosphat und/oder Acetat einsetzt.

3. Verfahren nach Anspruch 1 oder 2, dadurch gekennzeichnet, daß man als Katalysator Lithium, Natrium, Kalium, Magnesium und/oder Calcium und/oder mindestens eine stark basische Verbindung dieser Metalle einsetzt.

4. Verfahren nach einem der Ansprüche 1 bis 3, dadurch gekennzeichnet, daß man als Katalysator Natriumhydroxid oder Natriumacetat einsetzt.

5. Verfahren nach einem der Ansprüche 1 bis 4, dadurch gekennzeichnet, daß man etwa 0,1 bis etwa 10%, vorzugsweise etwa 0,5 bis etwa 5% Katalysator, bezogen auf das Gewicht der Polyurethanabfälle, einsetzt.

6. Verfahren nach Anspruch 1 dadurch gekennzeichnet, daß man das aliphatische Diol und die Polyurethanabfälle im Gewichtsverhältnis von etwa 3 : 5 bis etwa 5 : 1, vorzugsweise von etwa 4 : 5 bis etwa 2 : 1 einsetzt.

## Claims

1. Method for the manufacture of polyhydric alcohol containing fluids from polyurethane scrap by heating of optionally reduced-size polyurethane scrap with at least one glycol in the presence of at least one metal of the first or of the second main groups of the periodic system of elements and/or at least one strongly basic compound of a metal of the first or second main group of the periodic system of elements as catalyst at temperatures of approximately 150 to 220°C, characterised in that dipropylene glycol and/or tripropylene glycol are used as the glycol.

2. Method according to claim 1, characterised in that an oxide, hydroxide, alcoholate, phosphate and/or acetate are used as the strongly basic compound of a metal of the first or second main group of the periodic system of elements.

3. Method according to claim 1 or 2, characterised in that lithium, sodium, potassium magnesium and/or calcium and/or at least one strongly basic compound of these materials is used as the catalyst.

4. Method according to one of claims 1 to 3, characterised in that sodium hydroxide or sodium acetate is used at the catalyst.

5. Method according to one of claims 1 to 4, characterised in that approximately 0.1 to approximately 10%, preferably approximately 0.5 to approximately 5% of catalyst based upon the weight of the polyurethane scrap are used.

6. Method according to claim 1, characterised in that aliphatic dihydric alcohol and the polyurethane scrap are used in a weight ratio of approximately 3 : 5 to approximately 5 : 1, preferably of approximately 4 : 5 to approximately 2 : 1.

## Revendications

1. Procédé de préparation de liquides contenant des polyols à partir de déchets de polyuréthane par chauffage de déchets de polyuréthanes éventuellement broyés avec au moins un glycol, en présence d'au moins un métal du premier ou du deuxième groupe principal de la classification périodique des éléments et/ou d'au moins un composé fortement basique d'un métal du premier ou du second groupe principal de la classification périodique des éléments comme catalyseur, à des températures d'environ 150 à environ 220°C, caractérisé en ce qu'on utilise comme glycol du dipropylène glycol et/ou du tripropylène glycol.

2. Procédé suivant la revendication 1, caractérisé en ce qu'on utilise comme composé fortement basique d'un métal du premier ou du deuxième groupe principal de la classification périodique des éléments un oxyde, hydroxyde, alcoolate, phosphate et/ou acétate.

3. Procédé suivant l'une quelconque des revendications 1 ou 2, caractérisé en ce qu'on utilise comme catalyseur du lithium, du sodium, du potassium, du magnésium et/ou du calcium et/ou au moins composé fortement basique de ces métaux.

4. Procédé suivant l'une quelconque des revendications 1 à 3, caractérisé en ce qu'on utilise comme catalyseur de l'hydroxyde de sodium et/ou de l'acétate de sodium.

5. Procédé suivant l'une quelconque des revendications 1 à 4, caractérisé en ce qu'on utilise environ 0,1 à environ 10%, de préférence environ 0,5 à environ 5% de catalyseur, par rapport au poids des déchets de polyuréthane.

6. Procédé suivant la revendication 1, caractérisé en ce qu'on utilise le diol aliphatique et les déchets de polyuréthane dans un rapport pondéral d'environ 3 : 5 à environ 5 : 1, de préférence d'environ 4 : 5 à environ 2 : 1.